# EUROPEAN PATENT APPLICATION

(11) **EP 4 412 365 A1**
(43) Date of publication of application: **07.08.2024**
(21) Application number: 22885559.9
(22) Date of filing: 27.09.2022
(51) Int. Cl.: H04W 72/04

(54) **COMMUNICATION METHOD AND APPARATUS**

(30) Priority: 26.10.2021 CN 202111250469
(71) Applicant: Huawei Technologies Co., Ltd., Shenzhen, Guangdong 518129 (CN)
(72) Inventor: WEI, Fan, Shenzhen, Guangdong 518129 (CN); WANG, Lei, Shenzhen, Guangdong 518129 (CN); XU, Xiuqiang, Shenzhen, Guangdong 518129 (CN); PAOLINI, Enrico, 40136 Bologna (BO) (IT); CHIANI, Marco, 40136 Bologna (BO) (IT); VALENTINI, Lorenzo, 40136 Bologna (BO) (IT)
(74) Representative: Isarpatent
(86) International application number: PCT/CN2022/121873
(87) International publication number: WO 2023/071674

(57) **Abstract**

This application provides a communication method and apparatus, to resolve a problem of a high bit error rate, to improve a decoding success rate. The communication method and apparatus may be applied to a communication system. The method includes: A terminal device receives resource indication information from a network device. The resource indication information indicates N candidate resource sets, each candidate resource set includes a plurality of consecutive resources, and a quantity of resources in each candidate resource set is greater than or equal to a quantity of repeated transmission times. Resources in two adjacent candidate resource sets in the N candidate resource sets partially overlap. 2≤N, and N is a positive integer. The terminal device determines a target resource set, and determines a plurality of target resources. The target resource set is one resource set in the N candidate resource sets. The target resource is a resource in the target resource set. The terminal device sends same data once on each target resource.

## Description

This application claims priority to Chinese Patent Application No. 202111250469.7, filed with the China National Intellectual Property Administration on October 26, 2021 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

A non-orthogonal multiple access technology supports a plurality of users to share a same resource such as a time domain resource, a frequency domain resource, and a space domain resource in a communication process, to increase a quantity of access users in a communication system.

Currently, in the non-orthogonal multiple access technology, uplink data transmission may be implemented based on an uplink scheduling-free (grant free, GF) technology. Specifically, an uplink scheduling-free resource may be configured based on a periodicity. A quantity P of transmission occasions (transmission occasions, TOs) configured in one periodicity is greater than a quantity K of repeated transmission times. A terminal device needs to complete first transmission of data in any one of first K TOs in the periodicity, and continues to transmit the data in a TO after the first transmission TO until K repeated transmission times (where an actual quantity of repeated transmission times may be equal to K) of the data are completed. Alternatively, a last TO in the periodicity is also occupied (where an actual quantity of repeated transmission times may be less than K).

However, in the foregoing one periodicity, the terminal device selects the TO for the first transmission of the data in a random manner, and TOs for all repeated transmission of a same piece of data need to be consecutive. Consequently, data of two terminal devices easily collides on a plurality of consecutive TOs. This causes severe multiple access interference and a high bit error rate.

### SUMMARY

Embodiments of this application provide a communication method and apparatus, to resolve a problem of a high bit error rate in a communication system, to improve a decoding success rate.

To achieve the foregoing objective, the following technical solutions are applied to this application.

According to a first aspect, a communication method is provided. The communication method includes: A terminal device receives resource indication information from a network device. The resource indication information indicates N candidate resource sets, each candidate resource set includes a plurality of consecutive resources, and a quantity of resources in each candidate resource set is greater than or equal to a quantity of repeated transmission times. Resources in two adjacent candidate resource sets in the N candidate resource sets partially overlap. 2<N, and N is a positive integer. The terminal device determines a target resource set, and determines a plurality of target resources. The target resource set is one resource set in the N candidate resource sets. The target resource is a resource in the target resource set. The terminal device sends the same data once on each target resource.

Based on the communication method provided in the first aspect, the terminal device selects a target resource set from a plurality of candidate resource sets, selects a plurality of target resources from the target resource set, and sends same data once on each target resource. Resources in two adjacent candidate resource sets partially overlap, so that a quantity of active terminal devices on a resource other than an overlapping resource between the two adjacent candidate resource sets can be reduced. In other words, a resource conflict on the resource other than the overlapping resource between the two adjacent candidate resource sets can be reduced, to reduce mutual interference between terminal devices and improve a decoding success rate.

In a possible design solution, there is at least one first resource set in the N candidate resource sets, the first resource set is a resource set in which a first resource exists in the N candidate resource sets, and the first resource is a resource in the first resource set other than a shared resource between the first resource set and an adjacent candidate resource set of the first resource set. In this way, in the N candidate resource sets, more resources other than the shared resource between the first resource set and the adjacent candidate resource set of the first resource set may be configured, so that a probability of a conflict between different terminal devices on the first resource can be further reduced, to reduce mutual interference between different terminal devices, and further improve a decoding success rate.

Optionally, the first resource set may include one or more of the following: a 1^{st} resource set in the N candidate resource sets, a last resource set in the N candidate resource sets, or one or more resource sets between the 1^{st} resource set and the last resource set.

In a possible design solution, the resource indication information may further indicate a pilot sequence set, and the pilot sequence set includes a plurality of pilot sequences. The data transmitted each time corresponds to one pilot sequence in the pilot sequence set. In other words, when a same piece of data is transmitted on different resources, pilot sequences used may be the same or different. In this way, different pieces of data may correspond to different pilot sequences on each resource, and data of different terminal devices may be further distinguished in a code domain, to further improve the decoding success rate.

According to a second aspect, a communication method is provided. The communication method includes: A network device sends resource indication information. The resource indication information indicates N candidate resource sets, each candidate resource set includes a plurality of consecutive resources, and a quantity of resources in each candidate resource set is greater than or equal to a quantity of repeated transmission times. Resources in two adjacent candidate resource sets in the N candidate resource sets partially overlap. 2≤N, and N is a positive integer. The network device receives data from a plurality of terminal devices on resources in the N candidate resource sets. One terminal device corresponds to one candidate resource set, and a same piece of data of the terminal device is sent once on each of a plurality of resources in the candidate resource set. The network device determines a first resource set. The first resource set is a resource set in which a first resource exists in the N candidate resource sets, and the first resource is a resource in the first resource set other than a shared resource between the first resource set and an adjacent candidate resource set of the first resource set. The network device determines a decoding result of first data transmitted on the first resource.

Based on the communication method provided in the second aspect, the network device sends the resource indication information to indicate the N candidate resource sets, receives the data from the plurality of terminal devices on the N candidate resource sets, and determines the decoding result of the first data transmitted on the first resource. A same piece of data of each terminal device is sent once on each of a plurality of resources in one candidate resource set, resources in two adjacent candidate resource sets in the N candidate resource sets partially overlap, and the first resource is a resource other than an overlapping resource between the two adjacent candidate resource sets. In this way, data on a resource with a small quantity of active terminal devices may be first decoded, to reduce mutual interference between terminal devices and improve a decoding success rate.

In a possible design solution, the communication method according to the second aspect may further include: The network device determines second data based on the decoding result of the first data. The second data is data obtained by eliminating the first data from data corresponding to a second resource, and the second resource is a shared resource between two adjacent candidate resource sets in the N candidate resource sets. The network device determines a decoding result of the second data.

Optionally, there is at least one first resource set in the N candidate resource sets.

For example, the first resource set may include one or more of the following: a 1^{st} resource set in the N candidate resource sets, a last resource set in the N candidate resource sets, or one or more resource sets between the 1^{st} resource set and the last resource set.

According to a third aspect, a communication apparatus is provided. The communication apparatus includes a transceiver module and a processing module. The transceiver module is configured to receive resource indication information from a network device. The resource indication information indicates N candidate resource sets, each candidate resource set includes a plurality of consecutive resources, and a quantity of resources in each candidate resource set is greater than or equal to a quantity of repeated transmission times. Resources in two adjacent candidate resource sets in the N candidate resource sets partially overlap. 2≤N, and N is a positive integer. The processing module is configured to determine a target resource set. The target resource set is one resource set in the N candidate resource sets. The processing module is further configured to determine a plurality of target resources. The target resource is a resource in the target resource set. The transceiver module is further configured to send same data once on each target resource.

In a possible design solution, there is at least one first resource set in the N candidate resource sets, the first resource set is a resource set in which a first resource exists in the N candidate resource sets, and the first resource is a resource in the first resource set other than a shared resource between the first resource set and an adjacent candidate resource set of the first resource set.

Optionally, the first resource set may include one or more of the following: a 1^{st} resource set in the N candidate resource sets, a last resource set in the N candidate resource sets, or one or more resource sets between the 1^{st} resource set and the last resource set.

In a possible design solution, the resource indication information may further indicate a pilot sequence set, and the pilot sequence set includes a plurality of pilot sequences. The data transmitted each time corresponds to one pilot sequence in the pilot sequence set.

Optionally, the transceiver module may include a receiving module and a sending module. The transceiver module is configured to implement a sending function and a receiving function of the communication apparatus according to the third aspect.

Optionally, the communication apparatus according to the third aspect may further include a storage module. The storage module stores a program or instructions. When the processing module executes the program or the instructions, the communication apparatus is enabled to perform the communication method according to the first aspect.

It should be noted that, the communication apparatus according to the third aspect may be a terminal device, may be a chip (a system) or another component or assembly that may be disposed in the terminal device, or may be an apparatus that includes the terminal device. This is not limited in this application.

In addition, for a technical effect of the communication apparatus according to the third aspect, refer to the technical effect of the communication method according to the first aspect. Details are not described herein.

According to a fourth aspect, a communication apparatus is provided. The apparatus includes a transceiver module and a processing module. The transceiver module is configured to send resource indication information. The resource indication information indicates N candidate resource sets, each candidate resource set includes a plurality of consecutive resources, and a quantity of resources in each candidate resource set is greater than or equal to a quantity of repeated transmission times. Resources in two adjacent candidate resource sets in the N candidate resource sets partially overlap. 2≤N, and N is a positive integer. The transceiver module is further configured to receive data from a plurality of terminal devices on resources in the N candidate resource sets. One terminal device corresponds to one candidate resource set, and a same piece of data of the terminal device is sent once on each of a plurality of resources in the candidate resource set. The processing module is configured to determine a first resource set. The first resource set is a resource set in which a first resource exists in the N candidate resource sets, and the first resource is a resource in the first resource set other than a shared resource between the first resource set and an adjacent candidate resource set of the first resource set. The processing module is further configured to determine a decoding result of first data transmitted on the first resource.

In a possible design solution, the processing module may be further configured to determine second data based on the decoding result of the first data. The second data is data obtained by eliminating the first data from data corresponding to a second resource, and the second resource is a shared resource between two adjacent candidate resource sets in the N candidate resource sets. The processing module is further configured to determine a decoding result of the second data.

Optionally, there is at least one first resource set in the N candidate resource sets.

For example, the first resource set may include one or more of the following: a 1^{st} resource set in the N candidate resource sets, a last resource set in the N candidate resource sets, or one or more resource sets between the 1^{st} resource set and the last resource set.

Optionally, the transceiver module may include a receiving module and a sending module. The transceiver module is configured to implement a sending function and a receiving function of the communication apparatus according to the fourth aspect.

Optionally, the communication apparatus according to the fourth aspect may further include a storage module. The storage module stores a program or instructions. When the processing module executes the program or the instructions, the communication apparatus is enabled to perform the communication method according to the second aspect.

It should be noted that, the communication apparatus according to the fourth aspect may be a network device, may be a chip (a system) or another component or assembly that may be disposed in the network device, or may be an apparatus that includes the network device. This is not limited in this application.

In addition, for a technical effect of the communication apparatus according to the fourth aspect, refer to the technical effect of the communication method according to the second aspect. Details are not described herein.

According to a fifth aspect, a communication apparatus is provided. The communication apparatus is configured to perform the communication method according to any one of the implementations of the first aspect or the second aspect.

In this application, the communication apparatus according to the fifth aspect may be the terminal device according to the first aspect or the network device according to the second aspect, a chip (a system) or another component or assembly that may be disposed in the terminal device or the network device, or an apparatus that includes the terminal device or the network device.

It should be understood that the communication apparatus according to the fifth aspect includes a corresponding module, unit, or means (means) for implementing the communication method according to the first aspect or the second aspect. The module, unit, or means may be implemented by hardware, or may be implemented by software, or may be implemented by hardware executing corresponding software. The hardware or software includes one or more modules or units configured to perform functions related to the foregoing communication methods.

According to a sixth aspect, a communication apparatus is provided. The communication apparatus includes a processor, and the processor is configured to perform the communication method according to any one of the possible implementations of the first aspect or the second aspect.

In a possible design solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In a possible design solution, the communication apparatus according to the sixth aspect may further include a memory. The memory and the processor may be integrated together, or may be disposed separately. The memory may be configured to store a computer program and/or data related to the communication method according to the first aspect or the second aspect.

In this application, the communication apparatus according to the sixth aspect may be the terminal device according to the first aspect or the network device according to the second aspect, a chip (a system) or another component or assembly that may be disposed in the terminal device or the network device, or an apparatus that includes the terminal device or the network device.

According to a seventh aspect, a communication apparatus is provided. The communication apparatus includes a processor. The processor is coupled to a memory, and the processor is configured to execute a computer program stored in the memory, to enable the communication apparatus to perform the communication method according to any one of the possible implementations of the first aspect or the second aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In this application, the communication apparatus according to the seventh aspect may be the terminal device according to the first aspect or the network device according to the second aspect, a chip (a system) or another component or assembly that may be disposed in the terminal device or the network device, or an apparatus that includes the terminal device or the network device.

According to an eighth aspect, a communication apparatus is provided. The apparatus includes a processor and a memory. The memory is configured to store a computer program. When the processor executes the computer program, the communication apparatus is enabled to perform the communication method according to any one of the implementations of the first aspect or the second aspect.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In this application, the communication apparatus according to the eighth aspect may be the terminal device according to the first aspect or the network device according to the second aspect, a chip (a system) or another component or assembly that may be disposed in the terminal device or the network device, or an apparatus that includes the terminal device or the network device.

According to a ninth aspect, a communication apparatus is provided. The apparatus includes a processor. The processor is configured to: be coupled to a memory, and after reading a computer program in the memory, perform, based on the computer program, the communication method according to any one of the implementations of the first aspect or the second aspect.

In a possible design solution, the communication apparatus according to the ninth aspect may further include a transceiver. The transceiver may be a transceiver circuit or an interface circuit. The transceiver may be used by the communication apparatus according to the ninth aspect to communicate with another communication apparatus.

In this application, the communication apparatus according to the ninth aspect may be the terminal device according to the first aspect or the network device according to the second aspect, a chip (a system) or another component or assembly that may be disposed in the terminal device or the network device, or an apparatus that includes the terminal device or the network device.

In addition, for technical effects of the communication apparatuses according to the fifth aspect to the ninth aspect, refer to the technical effects of the communication methods according to the first aspect and the second aspect. Details are not described herein.

According to a tenth aspect, a processor is provided. The processor is configured to perform the communication method according to any one of the possible implementations of the first aspect or the second aspect.

According to an eleventh aspect, a communication system is provided. The system includes the communication apparatus according to any implementation of the third aspect and the communication apparatus according to any implementation of the fourth aspect.

According to a twelfth aspect, a computer-readable storage medium is provided. The storage medium includes a computer program or instructions. When the computer program or the instructions are run on a computer, the computer is enabled to perform the communication method according to any one of the possible implementations of the first aspect and the second aspect.

According to a thirteenth aspect, a computer program product is provided. The computer program product includes a computer program or instructions. When the computer program or the instructions are run on a computer, the computer is enabled to perform the communication method according to any one of the possible implementations of the first aspect and the second aspect.

### BRIEF DESCRIPTION OF DRAWINGS

FIG. 1 is a schematic diagram 1 of conventional uplink scheduling-free transmission;
FIG. 2 is a schematic diagram 2 of conventional uplink scheduling-free transmission;
FIG. 3 is a schematic diagram 1 of an architecture of a communication system according to an embodiment of this application;
FIG. 4 is a schematic diagram 2 of an architecture of a communication system according to an embodiment of this application;
FIG. 5 is a schematic flowchart of a communication method according to an embodiment of this application;
FIG. 6 is a schematic diagram of an overlapping resource according to an embodiment of this application;
FIG. 7 is a schematic diagram of a correspondence between a resource indicated by resource indication information and a pilot sequence according to an embodiment of this application;
FIG. 8 is a schematic diagram 1 of N candidate resource sets according to an embodiment of this application;
FIG. 9 is a schematic diagram 2 of N candidate resource sets according to an embodiment of this application;
FIG. 10 is a schematic diagram 3 of N candidate resource sets according to an embodiment of this application;
FIG. 11 is a schematic diagram 1 of a correspondence between data, a resource, and a pilot according to an embodiment of this application;
FIG. 12 is a schematic diagram 2 of a correspondence between data, a resource, and a pilot according to an embodiment of this application;
FIG. 13 is a schematic diagram 3 of a correspondence between data, a resource, and a pilot according to an embodiment of this application;
FIG. 14 is a schematic diagram of bit error rates in different resource configuration manners;
FIG. 15 is a schematic diagram 1 of a structure of a communication apparatus according to an embodiment of this application; and
FIG. 16 is a schematic diagram 2 of a structure of a communication apparatus according to an embodiment of this application.

### DESCRIPTION OF EMBODIMENTS

For ease of understanding, the following first describes background technologies in embodiments of this application.

A non-orthogonal multiple access technology supports a plurality of users to share a same resource such as a time domain resource, a frequency domain resource, and a space domain resource in a communication process, to increase a quantity of access users in a communication system.

Currently, in the non-orthogonal multiple access technology, uplink data transmission may be implemented based on an uplink scheduling-free (grant free) technology. Specifically, an uplink scheduling-free resource is configured based on a periodicity. A quantity P of transmission occasions (transmission occasions, TOs) configured in one periodicity is greater than or equal to a quantity K of repeated transmission times. A terminal device needs to complete first transmission of data in any one of first K TOs in the periodicity, and continues to transmit the data in a TO after the first transmission TO until K repeated transmission times (where an actual quantity of repeated transmission times may be equal to K) of the data are completed. Alternatively, a last TO in the periodicity is also occupied (where an actual quantity of repeated transmission times may be less than K).

However, in the foregoing one periodicity, the terminal device selects the TO for the first transmission of the data in a random manner, and TOs for all repeated transmission of a same piece of data need to be consecutive. Consequently, two terminal devices easily have conflicting data on a plurality of consecutive TOs. This causes severe multiple access interference and a high bit error rate.

The following examples are used for detailed description.

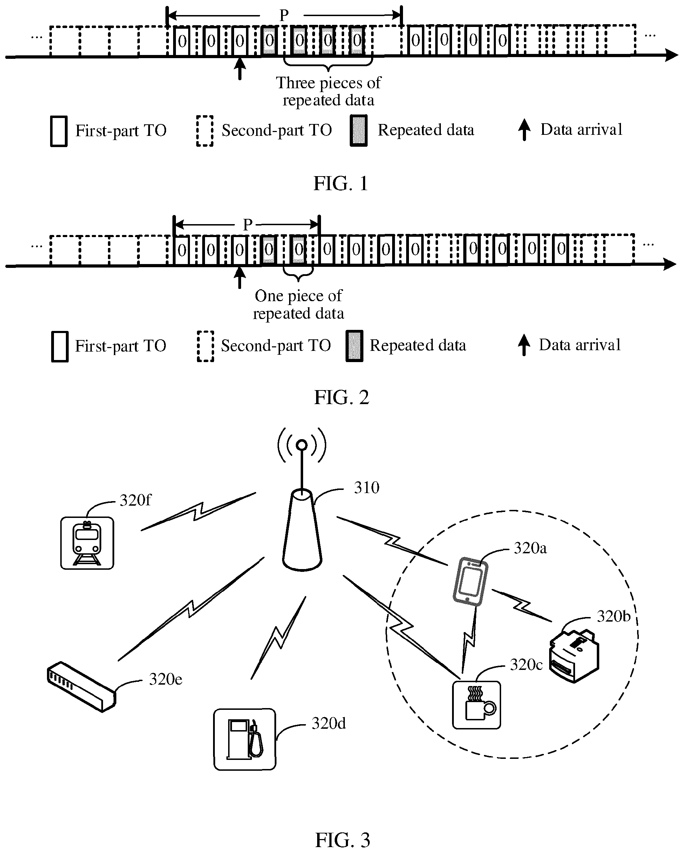

For example, as shown in FIG. 1, a quantity of repeated transmission times of one piece of data is 4, in one resource configuration periodicity, a quantity P of TOs is 8, a first-part TO includes a 1^{st} TO to a 4^{th} TO in the resource configuration periodicity, and a second-part TO includes a 5^{th} TO to an 8^{th} TO in the resource configuration periodicity. If a terminal device A selects the 4^{th} TO in the resource configuration periodicity for first transmission of data 1, the terminal device A may transmit the data 1 (a total of three pieces of repeated data) once on each of the 5^{th} TO to the 7^{th} TO. In this case, if a terminal device B selects the 4^{th} TO for first transmission of data 2, the terminal device B may transmit the data 2 once on each of the 5^{th} TO to the 7^{th} TO. In this case, data of the terminal device A conflicts with data of the terminal device B.

As shown in FIG. 2, a quantity of repeated transmission times of one piece of data is 4, in one resource configuration periodicity, a quantity P of TOs is 5, a first-part TO includes a 1^{st} TO to a 4^{th} TO in the resource configuration periodicity, and a second-part TO includes a 5^{th} TO in the resource configuration periodicity. If a terminal device A selects the 4^{th} TO in the resource configuration periodicity for first transmission of data 1, the terminal device A may transmit the data 1 once on the 5^{th} TO. In this case, if a terminal device B selects the 4^{th} TO for first transmission of data 2, the terminal device B may transmit the data 2 (one piece of repeated data) once on the 5^{th} TO. In this case, data of the terminal device A conflicts with data of the terminal device B.

In view of the foregoing problem, embodiments of this application provide a communication method, to resolve a problem of a high bit error rate in a communication system.

The following describes technical solutions of this application with reference to accompanying drawings.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system such as a long term evolution (long term evolution, LTE) system and a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the word "example" is used to present a concept in a specific manner.

In embodiments of this application, terms "information (information)", "signal (signal)", "message (message)", "channel (channel)", and "signaling (signaling)" may be interchangeably used sometimes. It should be noted that meanings expressed by the terms are consistent when differences of the terms are not emphasized. Terms "of (of)" and "corresponding (corresponding, relevant)" may be interchangeably used sometimes. It should be noted that meanings expressed by the terms are consistent when differences of the terms are not emphasized.

In embodiments of this application, a subscript, for example, W₁, may sometimes be written in an incorrect form, for example, W1. Expressed meanings are consistent when differences are not emphasized.

A network architecture and a service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the network architecture evolves and a new service scenario emerges.

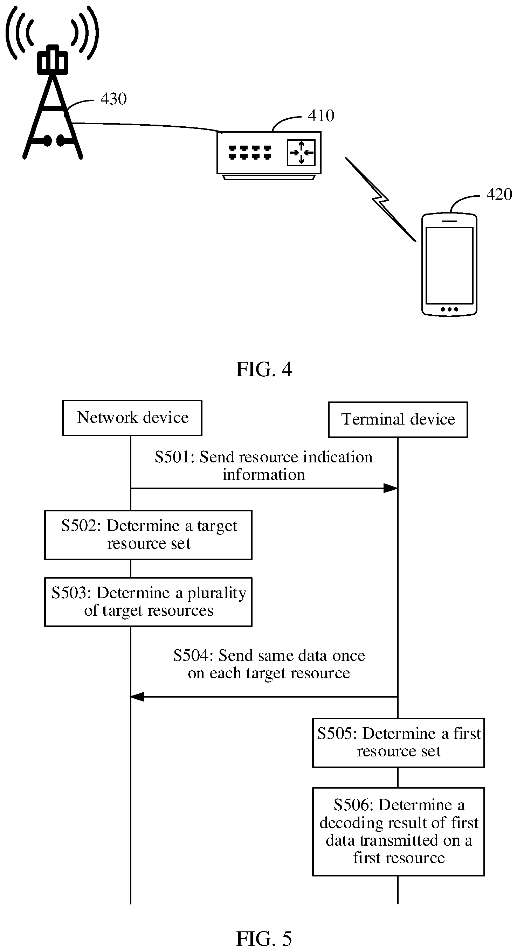

To better understand embodiments of this application, communication systems shown in FIG. 3 and FIG. 4 are used as examples to describe in detail a communication system applicable to embodiments of this application. For example, FIG. 3 is a schematic diagram 1 of an architecture of a communication system to which a communication method is applicable according to an embodiment of this application.

As shown in FIG. 3, the communication system includes a network device (310 in FIG. 3) and a terminal device (320a to 320f in FIG. 3).

The foregoing network device is a device that is located on a network side of the foregoing communication system and that has a wireless transceiver function, or a chip or a chip system that may be disposed in the device. The network device includes but is not limited to: an access point (access point, AP), for example, a home gateway, a router, a server, a switch, or a bridge, in a wireless fidelity (wireless fidelity, Wi-Fi) system, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a relay node, a wireless backhaul node, a transmission point (transmission and reception point, TRP, or transmission point, TP), or the like. The network device may alternatively be a gNB or a transmission point (TRP or TP) in a 5G system, for example, a new radio (new radio, NR) system, or one antenna panel or a group of antenna panels (including a plurality of antenna panels) of a base station in a 5G system. The network device may alternatively be a network node, for example, a baseband unit (BBU) or a distributed unit (distributed unit, DU), that constitutes a gNB or a transmission point, a road side unit (road side unit, RSU) having a base station function, or the like.

The foregoing terminal device is a terminal that accesses the foregoing communication system and that has a wireless transceiver function, or a chip or a chip system that may be disposed in the terminal. The terminal device may also be referred to as a user apparatus, an access terminal, a subscriber unit, a subscriber station, a mobile station, a mobile console, a remote station, a remote terminal, a mobile device, a user terminal, a terminal, a wireless communication device, a user agent or a user apparatus. The terminal device in embodiments of this application may be a mobile phone (mobile phone), a tablet computer (Pad), a computer that has a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine or telehealth services (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU that has a terminal function, or the like. The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle may implement the communication method in this application by using the vehicle-mounted module, the vehicle-mounted assembly, the vehicle-mounted component, the vehicle-mounted chip, or the vehicle-mounted unit that is built in the vehicle.

The network device and the terminal device may be at fixed locations, or may be movable. The network device and the terminal device may be deployed on the land, including an indoor device, an outdoor device, a handheld device, or a vehicle-mounted device; may be deployed on the water; or may be deployed on an airplane, a balloon, and a satellite in the air. An application scenario of the network device and the terminal device is not limited in embodiments of this application.

It may be understood that roles of the network device and the terminal device may be relative. For example, the terminal device 320a to the terminal device 320c in FIG. 3 may also form a communication system. The terminal device 320a in FIG. 3 may be configured as a network device. For the terminal device 320b that accesses the network device 310 by using 320a, the terminal device 320a may also be considered as a network device. However, for the network device 310, 320a is a terminal device. Certainly, 320a and 320b may alternatively communicate with each other by using an interface protocol between network devices. In this case, compared with 320b, 320a may alternatively be considered as a network device. Therefore, both the network device and the terminal device may be collectively referred to as communication apparatuses. 320a and 320b in FIG. 3 may be referred to as communication apparatuses having functions of the network device, and 320a and 320b in FIG. 3 may be referred to as communication apparatuses having functions of the terminal device.

FIG. 4 is a schematic diagram 2 of an architecture of a communication system to which a communication method is applicable according to an embodiment of this application. As shown in FIG. 4, the communication system includes a network device 410 and a terminal device 420. The network device 410 may be a single-hop (single-hop) or multi-hop (multi-hop) relay node. In this case, the foregoing network device 410 may be connected to a base station 430. For example, the relay node may be a small cell, an integrated access and backhaul (integrated access and backhaul, IAB) node, a distributed unit (distributed unit, DU), a terminal device, or a transmission point (transmitter and receiver point). It may be understood that, in this embodiment of this application, the relay node shown in FIG. 4 and the base station 430 may further form a network device.

For the terminal device 420, refer to the terminal device (320a to 320f shown in FIG. 3) shown in FIG. 3. Details are not described herein.

It should be noted that the communication method provided in this embodiment of this application is applicable to communication between the terminal devices, communication between the network devices, and communication between the terminal device and the network device shown in FIG. 3 or FIG. 4. For a specific implementation, refer to the following method embodiments. Details are not described herein.

It should be noted that the solutions in embodiments of this application may be further applied to another communication system, and a corresponding name may alternatively be a name of a corresponding function in the another communication system.

It should be understood that FIG. 3 and FIG. 4 are merely simplified schematic diagrams of examples for ease of understanding. The communication system may further include another network device and/or another terminal device that are/is not shown in FIG. 3 or FIG. 4.

The following describes in detail the communication method provided in embodiments of this application with reference to FIG. 5 to FIG. 14.

For example, FIG. 5 is a schematic flowchart of a communication method according to an embodiment of this application. The communication method is applicable to communication between the network device and the terminal device shown in FIG. 3 or FIG. 4.

As shown in FIG. 5, the communication method includes the following steps.

S501: The network device sends resource indication information to the terminal device, and the terminal device receives the resource indication information from the network device.

The resource indication information indicates N candidate resource sets, each candidate resource set includes a plurality of consecutive resources, and a quantity of resources in each candidate resource set is greater than or equal to a quantity of repeated transmission times. Resources in two adjacent candidate resource sets in the N candidate resource sets partially overlap. 2≤N, and N is a positive integer.

In this embodiment of this application, the resource may include a resource in a time domain dimension and a frequency domain dimension. For example, in time domain, the time-frequency resource may be one or more configured slots (slots) or one or more configured symbols (symbols). The slot may be a full slot (full slot), or may be a short slot (short slot, also referred to as a mini slot, mini slot). For another example, in frequency domain, the time-frequency resource may be configured frequency domain bandwidth, a configured quantity of resource blocks (resource blocks, RBs), a configured quantity of sub-bands (sub-bands), or a configured quantity of bandwidth parts (bandwidth parts, BWPs, also referred to as parts of bandwidth).

For example, the resource may be a TO. For example, one resource may include one or more TOs.

It should be noted that resources in a resource pool indicated by the resource indication information may include consecutive resources in the time domain dimension and/or the frequency domain dimension. For example, the resources in the resource pool may include a plurality of consecutive resources in the time domain dimension. For another example, the resources in the resource pool may include a plurality of consecutive resources in the frequency domain dimension. For still another example, the resources in the resource pool may include a plurality of consecutive resources in the time domain dimension and a plurality of consecutive resources in the frequency domain dimension.

Unless otherwise specified, the following uses an example in which the resources in the resource pool are a plurality of consecutive resources in the time domain dimension for description.

For example, the candidate resource set is a resource set formed by a plurality of resources that are consecutive in time domain and/or frequency domain and that are in the resources in the resource pool. A 1^{st} resource in a 1^{st} candidate resource set is a 1^{st} resource in the resource pool. For example, the 1^{st} resource in the 1^{st} candidate resource set may be indicated by the resource indication information. It may be understood that the 1^{st} resource in the 1^{st} candidate resource set may alternatively be agreed on in a protocol.

The quantity of repeated transmission times may be a quantity of times of sending one piece of data of the terminal device. For example, if one piece of data of the terminal device is sent three times, the quantity of repeated transmission times is 3. For different terminal devices, quantities of repeated transmission times between two terminal devices may be the same, or may be different.

The quantity of resources in each candidate resource set is greater than or equal to the quantity of repeated transmission times. In other words, for one terminal device, the quantity of resources in each candidate resource set is greater than or equal to a quantity of repeated transmission times corresponding to the terminal device. When there are a plurality of terminal devices, a quantity of resources in any candidate resource set may be greater than or equal to a maximum quantity of repeated transmission times in quantities of repeated transmission times respectively corresponding to the plurality of terminal devices.

The two adjacent candidate resource sets respectively correspond to different 1^{st} resources, and there is no 1^{st} resource in another candidate resource set between the 1^{st} resources in the two adjacent candidate resource sets.

That resources in two adjacent candidate resource sets partially overlap may be that there are some shared resources between the two adjacent candidate resource sets. Optionally, either of the two adjacent candidate resource sets may further include a resource other than a shared resource of all adjacent candidate resource sets. It may be understood that in this embodiment of this application, there may be one, two, or more overlapping resources between the two adjacent candidate resource sets. This is not limited in this embodiment of this application.

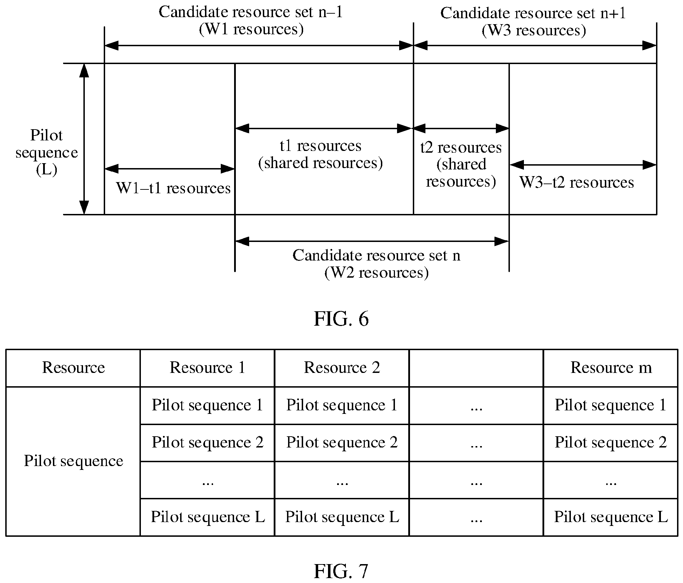

FIG. 6 is a schematic diagram of an overlapping resource according to an embodiment of this application. As shown in FIG. 6, adjacent candidate resource sets are a candidate resource set n-1, a candidate resource set n, and a candidate resource set n+1. If the candidate resource set n-1 includes W1 resources, the candidate resource set n includes W2 resources, and the candidate resource set n+1 includes W3 resources, there are t1 shared resources between the candidate resource set n-1 and the candidate resource set n. In the candidate resource set n-1, there are W 1-t1 resources other than the shared resources between the candidate resource set n-1 and the candidate resource set n. If there are t2 shared resources between the candidate resource set n and the candidate resource set n+1, a quantity of overlapping resources between the candidate resource set n and the candidate resource set n+1 is t2, and in the candidate resource set n, there are W3-t2 resources other than the overlapping resources between the candidate resource set n and the candidate resource set n+1. For each resource, a pilot sequence used by the terminal device to send data on the resource may be one of L pilot sequences. In other words, each resource may correspond to L pilot sequences. W1, W2, W3, n, t1, t2 and L are all positive integers, and 1<n<N.

For example, the resource indication information may indicate all resources in the resource pool, the quantity of resources included in each candidate resource set, and a quantity of shared resources between every two adjacent candidate resource sets, to indicate N candidate resource sets.

It should be noted that, in some embodiments, the candidate resource set may also be referred to as a resource window. The quantity of resources included in each candidate resource set may also be referred to as a window width. The quantity of shared resources between the two adjacent candidate resource sets may also be referred to as a coupling width.

In this way, the 1^{st} candidate resource set to an N^{th} candidate resource set may be determined based on content indicated by the resource indication information.

In a possible design solution, the resource indication information may further indicate a pilot sequence set, and the pilot sequence set may include one or more pilot sequences. Data transmitted each time corresponds to one pilot sequence in the pilot sequence set.

FIG. 7 is a schematic diagram of a correspondence between a resource indicated by resource indication information and a pilot sequence. As shown in FIG. 7, if the resource indicated by the resource indication information is a resource 1 to a resource m, and a pilot sequence set includes L pilot sequences (a pilot sequence 1 to a pilot sequence L), each resource of the resource 1 to the resource m corresponds to the L pilot sequences (the pilot sequence 1 to the pilot sequence L). In other words, the terminal device may send data on any resource by using one pilot sequence of the pilot sequence 1 to the pilot sequence L. m is a positive integer.

In this way, different pieces of data may correspond to different pilot sequences on each resource, and data of different terminal devices may be further distinguished in a code domain, to further improve a decoding success rate.

It may be understood that in this embodiment of this application, quantities of resources included in different candidate resource sets may be the same, or may be different. Quantities of shared resources of different adjacent candidate resource sets may be the same, or may be different.

The following uses an example to describe the N candidate resource sets indicated by the resource indication information.

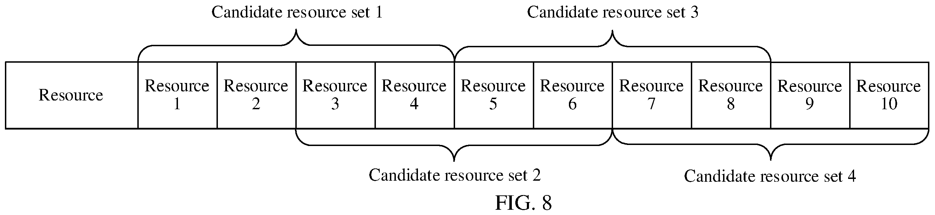

As shown in FIG. 8, if there are 10 resources indicated by the resource indication information in total, the resources are sequentially a resource 1 to a resource 10, a quantity of resources in each candidate resource set is 4, and a quantity of overlapping resources between two adjacent candidate resource sets is 2, N candidate resource sets are a candidate resource set 1 to a candidate resource set 4. Resources in the candidate resource set 1 include the resource 1 to the resource 4, resources in the candidate resource set 2 include the resource 3 to the resource 6, resources in the candidate resource set 3 include the resource 5 to the resource 8, and resources in the candidate resource set 4 include the resource 7 to the resource 10.

Adjacent candidate resource sets are the candidate resource set 1 and the candidate resource set 2, the candidate resource set 2 and the candidate resource set 3, or the candidate resource set 3 and the candidate resource set 4.

Overlapping resources between the candidate resource set 1 and the candidate resource set 2 are the resource 3 and the resource 4, overlapping resources between the candidate resource set 2 and the candidate resource set 3 are the resource 5 and the resource 6, and overlapping resources between the candidate resource set 3 and the candidate resource set 4 are the resource 7 and the resource 8.

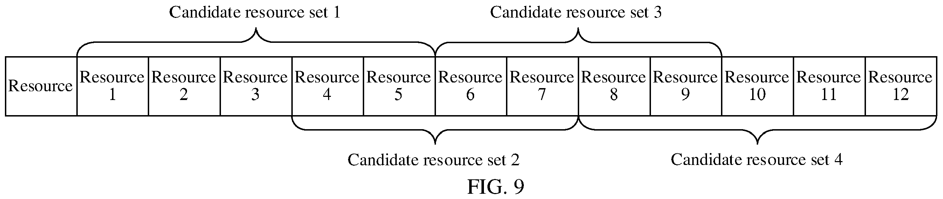

Alternatively, as shown in FIG. 9, if there are 12 resources indicated by the resource indication information in total, the resources are sequentially a resource 1 to a resource 12, quantities of resources in a 1^{st} candidate resource set and a last candidate resource set are both 5, a quantity of resources in a candidate resource set in N candidate resource sets other than the 1^{st} candidate resource set and the last candidate resource set is 4, and a quantity of overlapping resources between two adjacent candidate resource sets is 2, the N candidate resource sets are a candidate resource set 1 to a candidate resource set 4. Resources in the candidate resource set 1 include the resource 1 to the resource 5, resources in the candidate resource set 2 include the resource 4 to the resource 7, resources in the candidate resource set 3 include the resource 6 to the resource 9, and resources in the candidate resource set 4 include the resource 8 to the resource 12.

Adjacent candidate resource sets are the candidate resource set 1 and the candidate resource set 2, the candidate resource set 2 and the candidate resource set 3, or the candidate resource set 3 and the candidate resource set 4.

Overlapping resources between the candidate resource set 1 and the candidate resource set 2 are the resource 4 and the resource 5, overlapping resources between the candidate resource set 2 and the candidate resource set 3 are the resource 6 and the resource 7, and overlapping resources between the candidate resource set 3 and the candidate resource set 4 are the resource 8 and the resource 9.

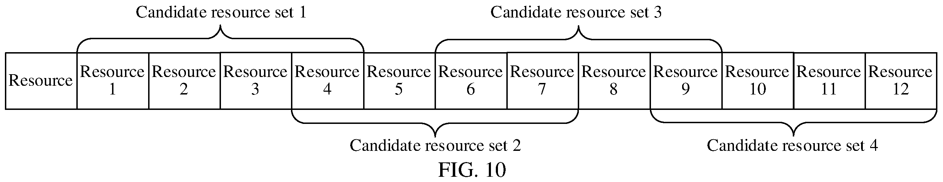

Alternatively, as shown in FIG. 10, if there are 12 resources indicated by the resource indication information, the resources are sequentially a resource 1 to a resource 12, a quantity of resources in each resource set is 4, a quantity of overlapping resources between a 1^{st} candidate resource set and a 2^{nd} candidate resource set and a quantity of overlapping resources between a 3^{rd} candidate resource set and a 4^{th} candidate resource set are both 1, and a quantity of overlapping resources between the 2^{nd} candidate resource set and the 3^{rd} candidate resource set is 2, N candidate resource sets are a candidate resource set 1 to a candidate resource set 4. Resources in the candidate resource set 1 include the resource 1 to the resource 4, resources in the candidate resource set 2 include the resource 4 to the resource 7, resources in the candidate resource set 3 include the resource 6 to the resource 9, and resources in the candidate resource set 4 include the resource 9 to the resource 12.

Adjacent candidate resource sets are the candidate resource set 1 and the candidate resource set 2, the candidate resource set 2 and the candidate resource set 3, or the candidate resource set 3 and the candidate resource set 4.

An overlapping resource between the candidate resource set 1 and the candidate resource set 2 is the resource 4, overlapping resources between the candidate resource set 2 and the candidate resource set 3 are the resource 6 and the resource 7, and an overlapping resource between the candidate resource set 3 and the candidate resource set 4 is the resource 9.

In a possible design solution, there is at least one first resource set in the N candidate resource sets, the first resource set is a resource set in which a first resource exists in the N candidate resource sets, and the first resource is a resource in a candidate resource set other than a shared resource between the candidate resource set and another adjacent candidate resource set of the candidate resource set, that is, between two adjacent candidate resource sets. The following separately describes the first resource by using examples with reference to FIG. 8 to FIG. 10.

As shown in FIG. 8, the resource 1, the resource 2, the resource 9, and the resource 10 are resources other than a shared resource between two adjacent candidate resource sets. In other words, the resource 1, the resource 2, the resource 9, and the resource 10 are all first resources.

Similarly, in FIG. 9, the resource 1 to the resource 3 and the resource 10 to the resource 12 are all first resources.

In FIG. 10, the resource 1 to the resource 3, the resource 5, the resource 8, and the resource 10 to the resource 12 are all first resources.

Optionally, the first resource set may include one or more of the following: a 1^{st} resource set in the N candidate resource sets, a last resource set in the N candidate resource sets, or one or more resource sets between the 1^{st} resource set and the last resource set.

The 1^{st} resource set in the N candidate resource sets may be a resource set whose 1^{st} resource has a foremost time domain location in the N candidate resource sets. For example, the 1^{st} resource set in the N candidate resource sets shown in any one of FIG. 8 to FIG. 10 is the candidate resource set 1.

The last resource set in the N candidate resource sets may be a resource set whose last resource has a rearmost time domain location in the N candidate resource sets. For example, the last resource set in the N candidate resource sets shown in any one of FIG. 8 to FIG. 10 is the candidate resource set 4.

It may be understood that, in this embodiment of this application, if the resources in the resource pool include a plurality of consecutive resources in frequency domain, the 1^{st} resource set in the N candidate resource sets may be a resource set whose 1^{st} resource has a foremost frequency domain location in the N candidate resource sets. The last resource set in the N candidate resource sets may be a resource set whose last resource has a rearmost frequency domain location in the N candidate resource sets. If the resources in the resource pool include both a plurality of consecutive resources in a time domain dimension and a plurality of consecutive resources in a frequency domain dimension, the 1^{st} resource set in the N candidate resource sets may be a resource set whose 1^{st} resource has the foremost time domain location and the foremost frequency domain location in the N candidate resource sets. The last resource set in the N candidate resource sets may be a resource set whose last resource has the rearmost time domain location and the rearmost frequency domain location in the N candidate resource sets.

The one or more resource sets between the 1^{st} resource set and the last resource set may be resource sets in the N candidate resource sets other than the 1^{st} resource set and the last resource set. For example, in any one of the accompanying drawings in FIG. 8 to FIG. 10, the resource set between the 1^{st} resource set and the last resource set includes the candidate resource set 2 and the candidate resource set 3.

With reference to FIG. 8 to FIG. 10, in FIG. 8 and FIG. 9, the first resource set is the 1^{st} resource set (the candidate resource set 1) and the last resource set (the candidate resource set 4). In FIG. 10, the first resource set is the 1^{st} resource set (the candidate resource set 1), the last resource (the candidate resource set 4), and the resource set (the candidate resource set 2 and the candidate resource set 3) between the 1^{st} resource set and the last resource set.

In this way, in the N candidate resource sets, more resources other than a shared resource between the first resource set and an adjacent candidate resource set of the first resource set may be configured, so that a probability of a conflict between different terminal devices on the first resource can be further reduced, to reduce mutual interference between different terminal devices, and further improve a decoding success rate.

It should be noted that the first resource set may include the 1^{st} resource set in the N candidate resource sets; the first resource set may include the last resource set in the N candidate resource sets; or the first resource set may include the one or more resource sets between the 1^{st} resource set and the last resource set. Alternatively, the first resource set may include a combination of any two of the following resource sets: the 1^{st} resource set in the N candidate resource sets, the last resource set in the N candidate resource sets, or the one or more resource sets between the 1^{st} resource set and the last resource set. Alternatively, the first resource set may include the following three types of resource sets: the 1^{st} resource set in the N candidate resource sets, the last resource set in the N candidate resource sets, or the one or more resource sets between the 1^{st} resource set and the last resource set.

In this embodiment of this application, the network device may send radio resource control (radio resource control, RRC) signaling including the resource indication information to the terminal device. For example, the resource indication information may be included in a master system information block (master information block, MIB) or a system information block (system information block, SIB).

S502: The terminal device determines a target resource set.

The target resource set is one resource set in the N candidate resource sets.

For example, the terminal device may randomly determine one resource set in the N candidate resource sets as the target resource set. Target resource sets determined by different terminal devices may be the same, or may be different.

That the N candidate resource sets are the candidate resource set 1 to the candidate resource set 4 shown in FIG. 8 is used as an example. The terminal device may determine any one of the candidate resource set 1 to the candidate resource set 4 shown in FIG. 8 as the target resource set.

S503: The terminal device determines a plurality of target resources.

The target resource is a resource in the target resource set.

For example, the terminal device may randomly determine a plurality of resources in the target resource set as the target resources.

A quantity of target resources determined by each terminal device is related to a quantity of times that data sent by the terminal device needs to be repeatedly transmitted. For example, if a quantity of repeated transmission times of data of one terminal device is K, a quantity of target resources corresponding to the terminal device is K.

The candidate resource set shown in FIG. 8 is used as an example. If the quantity of repeated transmission times of the data sent by the terminal device is 2, and the target resource set determined by the terminal device is the candidate resource set 1, the terminal device may randomly determine two resources in the candidate resource set 1, for example, the resource 2 and the resource 4, as target resources. It may be understood that a plurality of target resources determined by one terminal device may be consecutive or inconsecutive. In addition, target resources determined by different terminal devices may be the same, or may be different.

S504: The terminal device sends same data once on each target resource, and the network device receives data from a plurality of terminal devices on resources in the N candidate resource sets.

In this embodiment of this application, the same data means that information before encoding is consistent, and information after encoding may be consistent or inconsistent. Herein, consistency may be that meanings indicated by information are consistent.

For example, the data may be sent in a form of a data packet. In this case, the terminal device sends one data packet on each target resource, and each data packet includes a same piece of data.

With reference to FIG. 8, if the target resources determined by the terminal device are the resource 2 and the resource 4 shown in FIG. 8, the terminal device sends one data packet on both the resource 2 and the resource 4, and the data includes a same piece of data.

Optionally, before S504, the terminal device may further determine a pilot sequence corresponding to each target resource of the terminal device.

For example, the terminal device may randomly determine one pilot sequence in the pilot sequence set as a pilot sequence corresponding to one target resource of the terminal device. In this case, when the terminal device transmits data on each resource, each resource may correspond to any pilot sequence in the pilot sequence set. In other words, there is a correspondence between the resource, the pilot sequence, and the data of the terminal device.

The following separately provides descriptions with reference to FIG. 8 to FIG. 10.

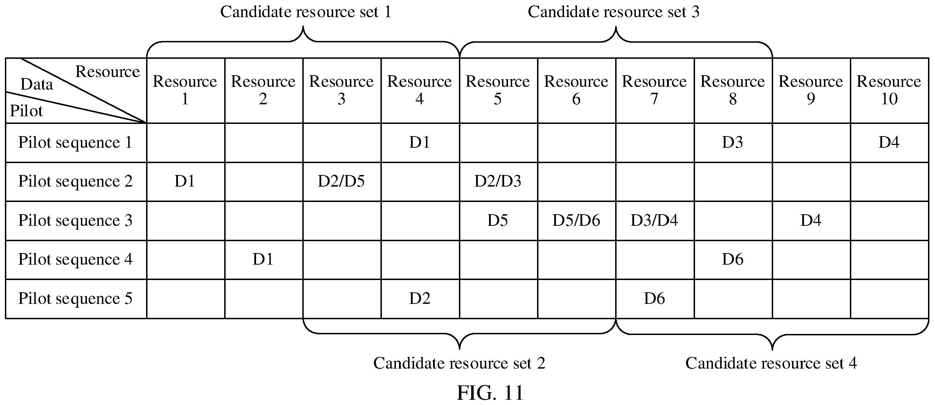

With reference to the candidate resource set shown in FIG. 8, the N candidate resource sets indicated by the resource indication information include the candidate resource set 1 to the candidate resource set 4, and each of a terminal device 1 to a terminal device 6 sends one piece of data. The terminal device 1 determines the candidate resource set 1 as a target resource set, the terminal device 2 determines the candidate resource set 2 as a target resource set, the terminal device 3 determines the candidate resource set 3 as a target resource set, the terminal device 4 determines the candidate resource set 4 as a target resource set, the terminal device 5 determines the candidate resource set 2 as the target resource set, and the terminal device 6 determines the candidate resource set 3 as the target resource set. The terminal device 1 to the terminal device 6 correspondingly send data D1 to data D6 respectively, and quantities of repeated transmission times of the data D1 to the data D6 are all 3. In this case, a correspondence between data, a pilot sequence, and a resource of each terminal device is shown in FIG. 11.

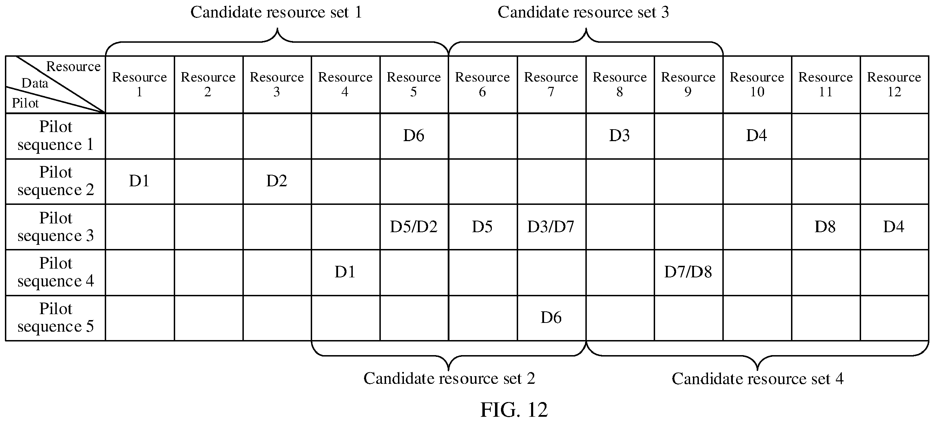

With reference to the candidate resource set shown in FIG. 9, the N candidate resource sets indicated by the resource indication information include the candidate resource set 1 to the candidate resource set 4, and each of a terminal device 1 to a terminal device 8 sends one piece of data. The terminal device 1 determines the candidate resource set 1 as a target resource set, the terminal device 2 determines the candidate resource set 1 as the target resource set, the terminal device 3 determines the candidate resource set 3 as a target resource set, the terminal device 4 determines the candidate resource set 4 as a target resource set, the terminal device 5 determines the candidate resource set 2 as a target resource set, the terminal device 6 determines the candidate resource set 2 as the target resource set, the terminal device 7 determines the candidate resource set 3 as the target resource set, and the terminal device 8 determines the candidate resource set 4 as the target resource set. The terminal device 1 to the terminal device 8 correspondingly send data D1 to data D8 respectively, and quantities of repeated transmission times of the data D1 to the data D8 are all 2. In this case, a correspondence between data, a pilot sequence, and a resource of each terminal device is shown in FIG. 12.

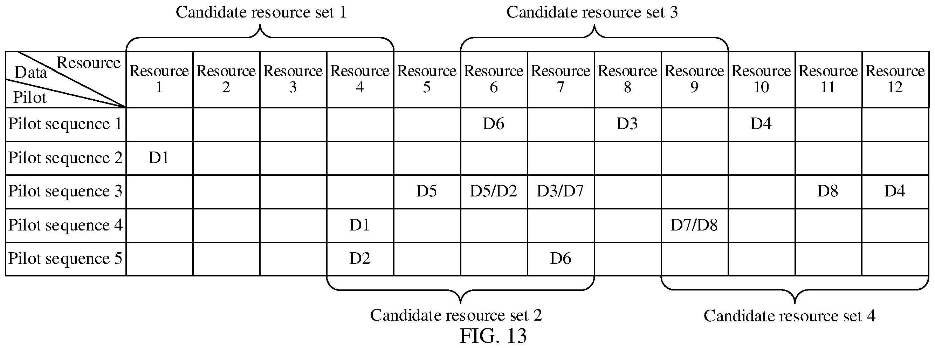

With reference to the candidate resource set shown in FIG. 10, the N candidate resource sets indicated by the resource indication information include the candidate resource set 1 to the candidate resource set 4, and each of a terminal device 1 to a terminal device 8 sends one piece of data. The terminal device 1 determines the candidate resource set 1 as a target resource set, the terminal device 2 determines the candidate resource set 2 as a target resource set, the terminal device 3 determines the candidate resource set 3 as a target resource set, the terminal device 4 determines the candidate resource set 4 as a target resource set, the terminal device 5 determines the candidate resource set 2 as the target resource set, the terminal device 6 determines the candidate resource set 2 as the target resource set, the terminal device 7 determines the candidate resource set 3 as the target resource set, and the terminal device 8 determines the candidate resource set 4 as the target resource set. The terminal device 1 to the terminal device 8 correspondingly send data D1 to data D8 respectively, and quantities of repeated transmission times of the data D1 to the data D8 are all 2. In this case, a correspondence between data, a pilot sequence, and a resource of each terminal device is shown in FIG. 13.

One terminal device corresponds to one candidate resource set, and a same piece of data of the terminal device is sent once on each of a plurality of resources in the candidate resource set.

For example, that a same piece of data of the terminal device is sent once on each of a plurality of resources in the candidate resource set may mean that data of the terminal device is transmitted on each of the plurality of resources, and information that is of a same terminal device and that is transmitted on each resource includes same data.

For a candidate resource set for transmitting a same piece of data of each terminal device, refer to the target resource set of the terminal device in S502. For a plurality of resources in the candidate resource set, refer to a target resource of each terminal device in S503. Details are not described herein.

In this embodiment of this application, when sending same data on each target resource, the terminal device may further send correspondence indication information at the same time. The network device may receive correspondence indication information of each terminal device. The correspondence indication information may indicate resources on which the same data is located respectively.

For example, the correspondence indication information may be sent together with the data of the terminal device. For example, the correspondence indication information may be carried in a data packet corresponding to the data sent by the terminal device.

The data D1 in FIG. 11 is used as an example. The terminal device 1 sends correspondence indication information on the resource 1, to indicate that the data D1 is further sent on the resource 2 and the resource 4. In this case, the resource indication information may be carried on the resource 2 and the resource 4. In addition, in this embodiment of this application, the correspondence indication information may further indicate a pilot sequence used when the data is sent on another resource. In this case, the correspondence between a data, a resource, and a pilot sequence may be obtained based on the correspondence indication information. For example, the correspondence indication information sent together with the data D 1 in FIG. 11 may indicate that the data D1 uses a pilot sequence 4 on the resource 2, and uses the pilot sequence 1 on the resource 4.

Optionally, the correspondence indication information may alternatively be sent before the data is sent. For example, the data is carried on a physical uplink shared channel (physical uplink shared channel, PUSCH), the correspondence indication information may be carried on a physical uplink shared channel (physical uplink control channel, PUCCH), and the PUCCH is located before the PUSCH in time domain.

S505: The network device determines the first resource set.

For an implementation of the first resource set, refer to the specific implementation of the first resource set in S501. Details are not described herein.

It may be understood that, in this embodiment of this application, S505 may be performed before S506. For example, S505 may be performed before any one of S501, S502, S503, or S504. This is not limited in this embodiment of this application.

S506: The network device determines a decoding result of first data transmitted on the first resource.

For example, the first data is data sent by the terminal device on the first resource, for example, the data D1 or the data D4 shown in FIG. 11.

In this embodiment of this application, when selecting a resource, the terminal device first selects a resource set, and then selects a resource from the resource set. With reference to FIG. 6, it can be learned that a probability of determining a shared resource between two adjacent resources as a target resource is higher. In this way, for the resources in the entire resource pool, more accessed terminal devices on the shared resource between the two adjacent resources indicates a smaller quantity of accessed terminal devices on the first resource, so that a probability that data of different terminal devices conflicts with each other is lower, and a probability of successful decoding is higher. Therefore, in this embodiment of this application, the network device may first determine the decoding result of the first data, to eliminate interference from the first data.

For example, the network device may perform channel estimation based on a pilot sequence corresponding to the first data transmitted on the first resource, to determine the decoding result of the first data based on a channel estimation result.

FIG. 11 is used as an example. The network device performs channel estimation based on a pilot sequence 2 of the data D1 transmitted on the resource 1, and then determines a decoding result of the data D1 based on a channel estimation result, and/or the network device performs channel estimation based on the pilot sequence 4 of the data D1 transmitted on the resource 2, and then determines a decoding result of the data D1 based on a channel estimation result. Similarly, the network device may determine a decoding result of the data D4 based on a pilot sequence 3 of the data D4 transmitted on the resource 9, and/or the network device may determine a decoding result of the data D4 based on the pilot sequence 1 of the data D4 transmitted on the resource 10.

For an implementation of determining the decoding result of the first data, refer to a specific implementation of determining a decoding result of data in a conventional technology. Details are not described in this embodiment of this application.

In a possible design solution, the communication method shown in FIG. 5 may further include Step 1 and Step 2.

Step 1: The network device determines second data based on the decoding result of the first data.

The second data is data obtained by eliminating interference of the first data from data corresponding to a second resource, and the second resource is a shared resource between the two adjacent candidate resource sets in the N candidate resource sets.

For example, in FIG. 11, the second resource may be a resource in the resource 3 to the resource 8.

For another example, in FIG. 12, the second resource may be a resource in the resource 4 to the resource 9.

For still another example, in FIG. 13, the second resource may be a resource in the resource 4, the resource 6, the resource 7, and the resource 9.

On each resource for sending the first data, a pilot sequence corresponding to the resource and the first data may be further sent.

Step 2: The network device determines a decoding result of the second data. For example, if pilot sequences of different terminal devices on a same resource are orthogonal, data of each terminal device may be decoded based on a pilot sequence corresponding to each terminal device on the resource. If pilot sequences of different terminal devices on a same resource are non-orthogonal, continuous interference cancellation decoding (also referred to as decoding) may be performed.

FIG. 11 is used as an example. Data sent by the terminal device 1 to the terminal device 6 is the data D1 to the data D6 in sequence. If the decoding result of the data D1 has been determined, the data D1 is still repeatedly transmitted on the resource 4, and a pilot sequence corresponding to the data D1 on the resource 4 is the pilot sequence 1, a process of determining the data D2 on the resource 4 is as follows. A channel estimation result of the terminal device 1 on the resource 4 is determined based on the pilot sequence 1. An interference signal of the data D1 on the resource 4 may be determined based on the channel estimation result of the terminal device 1 on the resource 4 and the decoding result of the data D 1. Alternatively, if a time domain location of the resource 1 is close to a time domain location of the resource 4, for example, a variation of a channel coefficient of the terminal device 1 between the resource 1 and the resource 4 is less than or equal to a first channel coefficient variation threshold, a signal of the data D1 on the resource 1 may be used as an interference signal of the data D1 on the resource 4. Then, the interference signal of the data D1 on the resource 4 is subtracted from signals received on the resource 4, in other words, interference of the data D1 is eliminated, to obtain data D2'. A decoding result of the data D2' may be determined based on the data D2' and a channel estimation result obtained based on a pilot sequence 5, to obtain the data D2.

After the data D2 is obtained, the data D5 may be determined on the resource 3. For example, a channel estimation result (equivalent to using the data D2 as a pilot sequence) of the terminal device 2 on the resource 3 may be obtained based on the data D2, and an interference signal that is of the pilot sequence 2 sent by the terminal device 2 and that is on the resource 3 is calculated based on the channel estimation result of the terminal device 2 on the resource 3. Then, the interference signal that is of the pilot sequence 2 sent by the terminal device 2 and that is on the resource 3 is subtracted from signals of a pilot sequence received on the resource 3, to obtain a signal of the pilot sequence 2 of the terminal device 5 on the resource 3. A channel estimation result of the terminal device 5 on the resource 3 may be obtained based on the signal of the pilot sequence 2 of the terminal device 5 on the resource 3, and the data D5 may be obtained by decoding based on the channel estimation result of the terminal device 5 on the resource 3.

Alternatively, if the time domain location of the resource 4 is close to a time domain location of the resource 3, for example, a variation of a channel coefficient of the terminal device between the resource 4 and the resource 3 is less than or equal to a second channel coefficient variation threshold, a channel estimation result of the terminal device 2 on the resource 4 may be used as a channel estimation result of the terminal device 2 on the resource 3, to obtain an interference signal of the pilot sequence 2 of the terminal device 2 on the resource 3. Then, the interference signal of the pilot sequence 2 of the terminal device 2 on the resource 3 is subtracted from signals of a pilot sequence received on the resource 3, to obtain a signal that is of the pilot sequence 2 of the terminal device 5 and that is received on the resource 3. An interference signal of the data D2 on the resource 3 is subtracted from signals received on the resource 3, to obtain data D5'. A channel estimation result of the terminal device 5 on the resource 3 may be obtained based on the signal of the pilot sequence 2 of the terminal device 5 on the resource 3, and the data D5 may be determined based on the channel estimation result of the terminal device 5 on the resource 3 and the data D5'.

Similar to determining the decoding of the data D5, the data D6 may be obtained based on the determined data D5.

In addition, the data D3 may be further determined. For example, the data D3 may be determined on the resource 5. For example, similar to the eliminated interference signal of the data D1 on the resource 4, an interference signal of the data D5 on the resource 5 may be eliminated. Then, the data D3 may be obtained by using a solution similar to that of determining the data D5 on the resource 3. Alternatively, similar to the data D3 determined on the resource 5, the data D3 may also be determined on the resource 7. Alternatively, similar to the data D2 determined on the resource 4, a decoding result of the data D3 may be determined on the resource 8 based on the data D6.

In this embodiment of this application, channel coefficient thresholds of two different resources may be the same, or may be different. A single carrier is used as an example, the first channel coefficient variation threshold may be E, and the second channel coefficient variation threshold may also be E or F, where both E and F are constants.

For an implementation of determining the decoding result of the second data by the network device, refer to a decoding technology in the conventional technology, for example, a continuous interference cancellation technology. Details are not described herein.

In another possible embodiment, the communication method may further include S501 to S506. A difference lies in that the network device may further send pilot indication information to the terminal device. The pilot indication information indicates a correspondence between a terminal device, a resource, and a pilot sequence. In other words, a pilot sequence that can be used by each terminal device to transmit data on each resource is configured by the network device. In this way, blind detection workload can be reduced, and efficiency can be improved. In this case, in the foregoing step S504, the foregoing correspondence indication information indicates a correspondence between data and a resource.

It may be understood that, in this embodiment of this application, the pilot indication information may be sent together with the resource indication information, or may be sent separately. Details are not described herein.

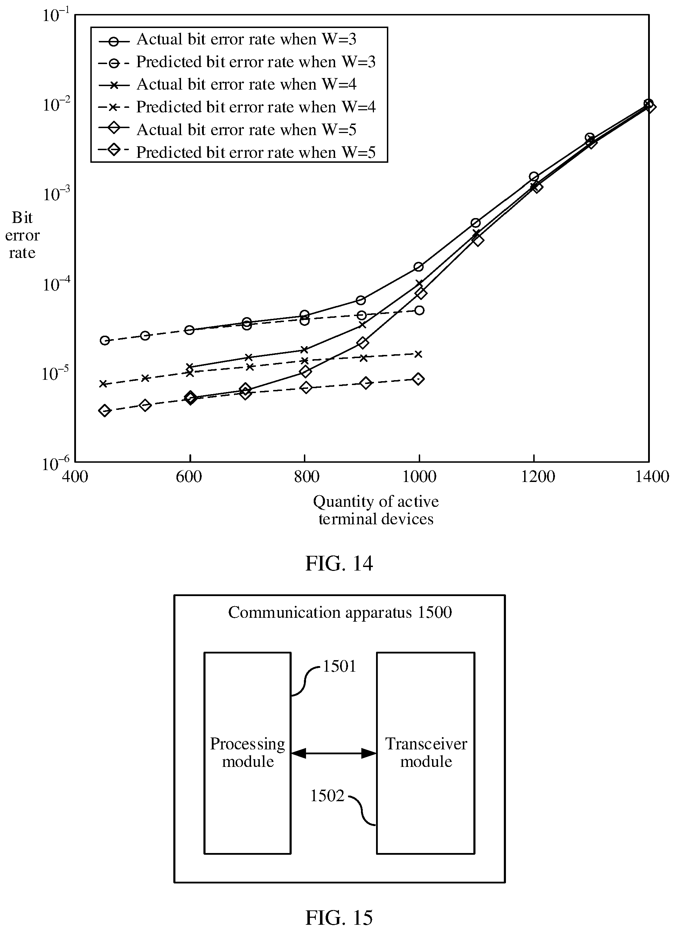

To further understand beneficial effects of the solutions in embodiments of this application, the following is described with reference to FIG. 14.

FIG. 14 is a schematic diagram of bit error rates in different resource configuration manners. As shown in FIG. 14, W is a quantity of resources in a candidate resource set. Resource configuration solutions include a resource configuration solution with W=3, a resource configuration solution with W=4, and a resource configuration solution with W=5. It can be learned that, in the solutions in this embodiment of this application, a larger quantity of resources in the candidate resource set indicates a smaller bit error rate. For example, a predicted bit error rate (a minimum bit error rate of analog simulation) when W=4 is greater than a predicted bit error rate when W=5, and an actual bit error rate when W=4 is greater than an actual bit error rate when W=5. In addition, when a quantity of active users is small, an actual bit error rate is close to a predicted bit error rate. As a quantity of active terminal devices approaches a terminal device capacity of a system, a communication bit error rate (for example, the actual bit error rate) gradually increases.

In conclusion, based on the communication method shown in FIG. 5, a terminal device selects a target resource set from a plurality of candidate resource sets, selects a plurality of target resources from the target resource set, and sends a same piece of data once on each target resource. Resources in two adjacent candidate resource sets partially overlap, so that a quantity of active terminal devices on a resource other than an overlapping resource between the two adjacent candidate resource sets can be reduced. In other words, a resource conflict on the resource other than the overlapping resource between the two adjacent candidate resource sets can be reduced, to reduce mutual interference between terminal devices and improve a decoding success rate.

A network device sends resource indication information to indicate N candidate resource sets, receives data from a plurality of terminal devices on the N candidate resource sets, and determines a decoding result of first data transmitted on a first resource. A same piece of data of each terminal device is sent once on each of a plurality of resources in one candidate resource set, resources in two adjacent candidate resource sets in the N candidate resource sets partially overlap, and the first resource is a resource other than an overlapping resource between the two adjacent candidate resource sets. In this way, data on a resource with a small quantity of active terminal devices may be first decoded, to reduce the mutual interference between the terminal devices and improve the decoding success rate.

The foregoing describes in detail the communication method provided in embodiments of this application with reference to FIG. 5 to FIG. 14. With reference to FIG. 15 to FIG. 16, the following describes in detail a communication apparatus configured to perform the communication method provided in embodiments of this application.

FIG. 15 is a schematic diagram 1 of a structure of a communication apparatus according to an embodiment of this application. As shown in FIG. 15, the communication apparatus 1500 includes a processing module 1501 and a transceiver module 1502. For ease of description, only main components of the communication apparatus are shown in FIG. 15.

In some embodiments, the communication apparatus 1500 is applicable to the communication system shown in FIG. 3 or FIG. 4, and perform a function of the terminal device in the communication method shown in FIG. 5.

The transceiver module 1502 is configured to receive resource indication information from a network device.

The resource indication information indicates N candidate resource sets, each candidate resource set includes a plurality of consecutive resources, and a quantity of resources in each candidate resource set is greater than or equal to a quantity of repeated transmission times. Resources in two adjacent candidate resource sets in the N candidate resource sets partially overlap. 2≤N, and N is a positive integer.

The processing module 1501 is configured to determine a target resource set. The target resource set is one resource set in the N candidate resource sets. The processing module 1501 is further configured to determine a plurality of target resources. The target resource is a resource in the target resource set.

The transceiver module 1502 is further configured to send same data once on each target resource.

In a possible design solution, there is at least one first resource set in the N candidate resource sets, the first resource set is a resource set in which a first resource exists in the N candidate resource sets, and the first resource is a resource in the first resource set other than a shared resource between the first resource set and an adjacent candidate resource set of the first resource set.

Optionally, the first resource set includes one or more of the following: a 1^{st} resource set in the N candidate resource sets, a last resource set in the N candidate resource sets, or one or more resource sets between the 1^{st} resource set and the last resource set.

In a possible design solution, the resource indication information further indicates a pilot sequence set, and the pilot sequence set includes a plurality of pilot sequences. First data transmitted each time corresponds to one pilot sequence in the pilot sequence set.

Optionally, the transceiver module 1502 may include a receiving module and a sending module (not shown in FIG. 15). The transceiver module 1502 is configured to implement a sending function and a receiving function of the communication apparatus 1500.

Optionally, the communication apparatus 1500 may further include a storage module (not shown in FIG. 15), and the storage module stores a program or instructions. When the processing module 1501 executes the program or the instructions, the communication apparatus 1500 is enabled to perform the function of the terminal device in the communication method shown in any one of the implementations in FIG. 5.

It should be understood that the processing module 1501 in the communication apparatus 1500 may be implemented by a processor or a processor-related circuit component, and may be a processor or a processing unit. The transceiver module 1502 may be implemented by a transceiver or a transceiver-related circuit component, and may be a transceiver or a transceiver unit.

It should be noted that, the communication apparatus 1500 may be a terminal device, may be a chip (a system) or another component or assembly that may be disposed in the terminal device, or may be an apparatus that includes the terminal device. This is not limited in this application.

In addition, for a technical effect of the communication apparatus 1500, refer to the technical effect of the communication method shown in any one of the implementations in FIG. 5. Details are not described herein.

In some other embodiments, the communication apparatus 1500 is applicable to the communication system shown in FIG. 3 or FIG. 4, and perform the function of the network device in the communication method shown in FIG. 5

The transceiver module 1502 is configured to send resource indication information.

The resource indication information indicates N candidate resource sets, each candidate resource set includes a plurality of consecutive resources, and a quantity of resources in each candidate resource set is greater than or equal to a quantity of repeated transmission times. Resources in two adjacent candidate resource sets in the N candidate resource sets partially overlap. 2≤N, and N is a positive integer.

The transceiver module 1502 is further configured to receive data from a plurality of terminal devices on resources in the N candidate resource sets.

One terminal device corresponds to one candidate resource set, and a same piece of data of the terminal device is sent once on each of a plurality of resources in the candidate resource set.

The processing module 1501 is configured to determine a first resource set.

The first resource set is a resource set in which a first resource exists in the N candidate resource sets, and the first resource is a resource in the first resource set other than a shared resource between the first resource set and an adjacent candidate resource set of the first resource set.

The processing module 1501 is further configured to determine a decoding result of first data transmitted on the first resource.

In a possible design solution, the processing module 1501 is further configured to determine second data based on the decoding result of the first data. The second data is data obtained by eliminating the first data from data corresponding to a second resource, and the second resource is a shared resource between two adjacent candidate resource sets in the N candidate resource sets. The processing module 1501 is further configured to determine a decoding result of the second data.

Optionally, there is at least one first resource set in the N candidate resource sets.

For example, the first resource set includes one or more of the following: a 1^{st} resource set in the N candidate resource sets, a last resource set in the N candidate resource sets, or one or more resource sets between the 1^{st} resource set and the last resource set.

Optionally, the transceiver module 1502 may include a receiving module and a sending module. The transceiver module 1502 is configured to implement a sending function and a receiving function of the communication apparatus 1500.

Optionally, the communication apparatus 1500 may further include a storage module (not shown in FIG. 15), and the storage module stores a program or instructions. When the processing module 1501 executes the program or the instructions, the communication apparatus 1500 is enabled to perform the function of the network device in the communication method shown in any one of the implementations in FIG. 5.

It should be understood that the processing module 1501 in the communication apparatus 1500 may be implemented by a processor or a processor-related circuit component, and may be a processor or a processing unit. The transceiver module 1502 may be implemented by a transceiver or a transceiver-related circuit component, and may be a transceiver or a transceiver unit.

It should be noted that the communication apparatus 1500 may be the network device shown in FIG. 3 or FIG. 4, may be a chip (a system) or another component or assembly that is disposed in the foregoing network device, or may be an apparatus that includes the network device. This is not limited in this embodiment of this application.

In addition, for the technical effect of the communication apparatus 1500, refer to the technical effect of the communication method shown in any one of the implementations in FIG. 5 separately. Details are not described herein.

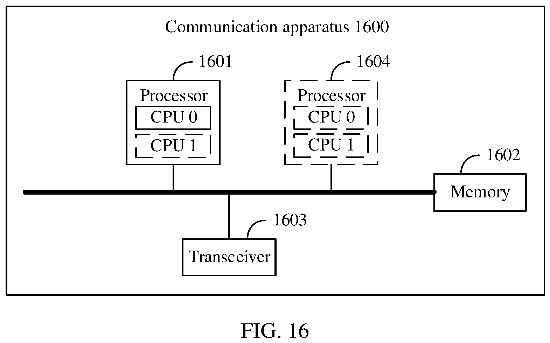

For example, FIG. 16 is a schematic diagram 2 of a structure of a communication apparatus according to an embodiment of this application. The communication apparatus may be a terminal device or a network device, or may be a chip (a system) or another component or assembly that may be disposed in the terminal device or the network device. As shown in FIG. 16, the communication apparatus 1600 may include a processor 1601. Optionally, the communication apparatus 1600 may further include a memory 1602 and/or a transceiver 1603. The processor 1601 is coupled to the memory 1602 and the transceiver 1603, for example, may be connected to the memory 1602 and the transceiver 1603 through a communication bus.

The following specifically describes various components of the communication apparatus 1600 with reference to FIG. 16.

The processor 1601 is a control center of the communication apparatus 1600, and may be one processor, or may be a collective name of a plurality of processing elements. For example, the processor 1601 is one or more central processing units (central processing units, CPUs), may be an application-specific integrated circuit (application-specific integrated circuit, ASIC), or is configured as one or more integrated circuits for implementing embodiments of this application, for example, one or more microprocessors (digital signal processor, DSP) or one or more field programmable gate arrays (field programmable gate arrays, FPGAs).

Optionally, the processor 1601 may execute various functions of the communication apparatus 1600 by running or executing a software program stored in the memory 1602 and invoking data stored in the memory 1602.

During specific implementation, in an embodiment, the processor 1601 may include one or more CPUs, for example, a CPU 0 and a CPU 1 shown in FIG. 16.

During specific implementation, in an embodiment, the communication apparatus 1600 may include a plurality of processors, for example, the processor 1601 and a processor 1604 shown in FIG. 16. Each of the processors may be a single-core processor (single-CPU) or may be a multicore processor (multi-CPU). The processor herein may be one or more devices, circuits, and/or processing cores configured to process data (for example, computer program instructions).

The memory 1602 is configured to store the software program for executing the solutions of this application, and the processor 1601 controls execution of the software program. For a specific implementation, refer to the foregoing method embodiment. Details are not described herein.

Optionally, the memory 1602 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray optical disc, and the like), a magnetic disk storage medium or another magnetic storage device, or any other medium that can be configured to carry or store expected program code in a form of instructions or a data structure and that can be accessed by a computer. However, the memory is not limited thereto. The memory 1602 may be integrated with the processor 1601, or may exist independently, and is coupled to the processor 1601 through an interface circuit (not shown in FIG. 16) of the communication apparatus 1600. This is not specifically limited in this embodiment of this application.

The transceiver 1603 is configured to communicate with another communication apparatus. For example, the communication apparatus 1600 is a terminal device, and the transceiver 1603 may be configured to communicate with a network device or communicate with another terminal device. For another example, the communication apparatus 1600 is a network device, and the transceiver 1603 may be configured to communicate with a terminal device or communicate with another network device.

Optionally, the transceiver 1603 may include a receiver and a transmitter (not separately shown in FIG. 16). The receiver is configured to implement a receiving function, and the transmitter is configured to implement a sending function.

Optionally, the transceiver 1603 may be integrated with the processor 1601, or may exist independently, and is coupled to the processor 1601 through an interface circuit (not shown in FIG. 16) of the communication apparatus 1600. This is not specifically limited in this embodiment of this application.

It should be noted that the structure of the communication apparatus 1600 shown in FIG. 16 does not constitute a limitation on the communication apparatus. An actual communication apparatus may include more or fewer components than those shown in the figure, or combine some components, or have different component arrangement.

In addition, for a technical effect of the communication apparatus 1600, refer to the technical effect of the communication method in the foregoing method embodiment. Details are not described herein.

An embodiment of this application further provides a chip system, including a processor. The processor is coupled to a memory, the memory is configured to store a program or instructions, and when the program or the instructions are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

An embodiment of this application provides a communication system. The communication system includes one or more terminal devices and one or more network devices.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of random access memories (random access memories, RAMs) can be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, a circuit), firmware, or any combination thereof. When the software is used to implement embodiments, the foregoing embodiments may be implemented completely or partially in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the processes do not mean execution sequences in embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein.

In several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a terminal device, and the method comprises:
receiving resource indication information from a network device, wherein the resource indication information indicates N candidate resource sets, each candidate resource set comprises a plurality of consecutive resources, a quantity of resources in each candidate resource set is greater than or equal to a quantity of repeated transmission times, resources in two adjacent candidate resource sets in the N candidate resource sets partially overlap, 2≤N, and N is a positive integer;
determining a target resource set, wherein the target resource set is one resource set in the N candidate resource sets;
determining a plurality of target resources, wherein the target resource is a resource in the target resource set; and
sending same data once on each target resource.

2. The communication method according to claim 1, wherein there is at least one first resource set in the N candidate resource sets, the first resource set is a resource set in which a first resource exists in the N candidate resource sets, and the first resource is a resource in the first resource set other than a shared resource between the first resource set and an adjacent candidate resource set of the first resource set.

3. The communication method according to claim 2, wherein the first resource set comprises one or more of the following: a 1^{st} resource set in the N candidate resource sets, a last resource set in the N candidate resource sets, or one or more resource sets between the 1^{st} resource set and the last resource set.

4. The communication method according to any one of claims 1 to 3, wherein the resource indication information further indicates a pilot sequence set, and the pilot sequence set comprises a plurality of pilot sequences; and
the data transmitted each time corresponds to one pilot sequence in the pilot sequence set.

5. A communication method, wherein the method is applied to a network device, and the method comprises:
sending resource indication information, wherein the resource indication information indicates N candidate resource sets, each candidate resource set comprises a plurality of consecutive resources, a quantity of resources in each candidate resource set is greater than or equal to a quantity of repeated transmission times, resources in two adjacent candidate resource sets in the N candidate resource sets partially overlap, 2≤N, and N is a positive integer;
receiving data from a plurality of terminal devices on resources in the N candidate resource sets, wherein one terminal device corresponds to one candidate resource set, and a same piece of data of the terminal device is sent once on each of a plurality of resources in the candidate resource set;
determining a first resource set, wherein the first resource set is a resource set in which a first resource exists in the N candidate resource sets, and the first resource is a resource in the first resource set other than a shared resource between the first resource set and an adjacent candidate resource set of the first resource set; and
determining a decoding result of first data transmitted on the first resource.

6. The communication method according to claim 5, wherein the method further comprises:
determining second data based on the decoding result of the first data, wherein the second data is data obtained by eliminating the first data from data corresponding to a second resource, and the second resource is a shared resource between the two adjacent candidate resource sets in the N candidate resource sets; and
determining a decoding result of the second data.

7. The communication method according to claim 5 or 6, wherein there is at least one first resource set in the N candidate resource sets.

8. The communication method according to claim 7, wherein the first resource set comprises one or more of the following: a 1^{st} resource set in the N candidate resource sets, a last resource set in the N candidate resource sets, or one or more resource sets between the 1^{st} resource set and the last resource set.

9. A communication apparatus, wherein the apparatus comprises a transceiver module and a processing module, wherein
the transceiver module is configured to receive resource indication information from a network device, wherein the resource indication information indicates N candidate resource sets, each candidate resource set comprises a plurality of consecutive resources, a quantity of resources in each candidate resource set is greater than or equal to a quantity of repeated transmission times, resources in two adjacent candidate resource sets in the N candidate resource sets partially overlap, 2≤N, and N is a positive integer;
the processing module is configured to determine a target resource set, wherein the target resource set is one resource set in the N candidate resource sets;
the processing module is further configured to determine a plurality of target resources, wherein the target resource is a resource in the target resource set; and
the transceiver module is further configured to send same data once on each target resource.

10. The communication apparatus according to claim 9, wherein there is at least one first resource set in the N candidate resource sets, the first resource set is a resource set in which a first resource exists in the N candidate resource sets, and the first resource is a resource in the first resource set other than a shared resource between the first resource set and an adjacent candidate resource set of the first resource set.

11. The communication apparatus according to claim 10, wherein the first resource set comprises one or more of the following: a 1^{st} resource set in the N candidate resource sets, a last resource set in the N candidate resource sets, or one or more resource sets between the 1^{st} resource set and the last resource set.

12. The communication apparatus according to any one of claims 9 to 11, wherein the resource indication information further indicates a pilot sequence set, and the pilot sequence set comprises a plurality of pilot sequences; and
the data transmitted each time corresponds to one pilot sequence in the pilot sequence set.

13. A communication apparatus, wherein the apparatus comprises a transceiver module and a processing module, wherein
the transceiver module is configured to send resource indication information, wherein the resource indication information indicates N candidate resource sets, each candidate resource set comprises a plurality of consecutive resources, a quantity of resources in each candidate resource set is greater than or equal to a quantity of repeated transmission times, resources in two adjacent candidate resource sets in the N candidate resource sets partially overlap, 2≤N, and N is a positive integer;
the transceiver module is further configured to receive data from a plurality of terminal devices on resources in the N candidate resource sets, wherein one terminal device corresponds to one candidate resource set, and a same piece of data of the terminal device is sent once on each of a plurality of resources in the candidate resource set;
the processing module is configured to determine a first resource set, wherein the first resource set is a resource set in which a first resource exists in the N candidate resource sets, and the first resource is a resource in the first resource set other than a shared resource between the first resource set and an adjacent candidate resource set of the first resource set; and
the processing module is further configured to determine a decoding result of first data transmitted on the first resource.

14. The communication apparatus according to claim 13, wherein
the processing module is further configured to determine second data based on the decoding result of the first data, wherein the second data is data obtained by eliminating the first data from data corresponding to a second resource, and the second resource is a shared resource between the two adjacent candidate resource sets in the N candidate resource sets; and
the processing module is further configured to determine a decoding result of the second data.

15. The communication apparatus according to claim 13 or 14, wherein there is at least one first resource set in the N candidate resource sets.

16. The communication apparatus according to claim 15, wherein the first resource set comprises one or more of the following: a 1^{st} resource set in the N candidate resource sets, a last resource set in the N candidate resource sets, or one or more resource sets between the 1^{st} resource set and the last resource set.

17. A communication apparatus, comprising a processor, wherein the processor is coupled to a memory; and
the processor is configured to execute a computer program stored in the memory, to enable the communication apparatus to perform the communication method according to any one of claims 1 to 8.

18. A communication apparatus, comprising a processor and an interface circuit, wherein
the interface circuit is configured to receive code instructions and transmit the code instructions to the processor; and
the processor is configured to run the code instructions to perform the method according to any one of claims 1 to 8.

19. A communication apparatus, wherein the communication apparatus comprises a processor and a transceiver, the transceiver is configured to exchange information between the communication apparatus and another communication apparatus, and the processor executes program instructions to perform the communication method according to any one of claims 1 to 8.

20. A computer-readable storage medium, wherein the computer-readable storage medium comprises a computer program or instructions, and when the computer program or the instructions are run on a computer, the computer is enabled to perform the communication method according to any one of claims 1 to 8.

21. A computer program product, wherein the computer program product comprises a computer program or instructions, and when the computer program or the instructions are run on a computer, the computer is enabled to perform the communication method according to any one of claims 1 to 8.

22. A communication system, comprising a terminal device and a network device, wherein the terminal device is configured to perform the method according to any one of claims 1 to 4, and the network device is configured to perform the method according to any one of claims 5 to 8.
